# FASCICULE DE BREVET EUROPEEN

(11) **EP 1 251 257 B1**
(45) Date de publication et mention de la délivrance du brevet: **04.08.2004**
(21) Numéro de dépôt: 02290762.0
(22) Date de dépôt: 27.03.2002
(51) Int. Cl.: F02C 7/047

(54) **Capot d'entrée d'air pour moteur à réaction, pourvu de moyens de dégivrage**
Lufteinlasshaube eines Strahltriebwerkes mit Enteisungsvorrichtung
Jet engine air intake fairing with de-icing device

(30) Priorité: 17.04.2001 FR 0105194
(43) Date de publication de la demande: 23.10.2002
(73) Titulaire: AIRBUS FRANCE, 31060 Toulouse (FR)
(72) Inventeur: Andre, Robert, 31320Auzeville Tolosane (FR); Porte, Alain, 31770 Colomiers (FR)
(74) Mandataire: Bonnetat, Christian

(56) Documents cités:
- EP-A- 0 918 149
- US-A- 4 757 963
- US-A- 5 400 984

## Description

La présente invention concerne le dégivrage des capots d'entrée d'air de moteurs à réaction, notamment des moteurs d'aéronefs.

On sait que, en cas de besoin (prévention contre la formation de givre ou élimination de givre déjà formé), le bord d'attaque du capot d'entrée d'air de tels moteurs est dégivré par réchauffement par de l'air chaud sous pression, prélevé sur ledit moteur et amené audit bord d'attaque par un circuit de circulation d'air chaud. Cet air chaud sous pression, prélevé sur le moteur, est à une température élevée, par exemple de l'ordre de 400°C, de sorte que ladite conduite rayonne de la chaleur et que les structures environnantes dudit capot d'entrée d'air, sensibles à la chaleur (par exemple les panneaux acoustiques en matériau composite), doivent être protégées contre la chaleur. De plus, pour des raisons de sécurité évidentes, il est également nécessaire de prévoir une protection desdites structures environnantes, dans le cas de fuites d'air chaud sous pression ou de rupture de ladite conduite.

A cet effet, par le document EP-0 918 149 (US-6 241 189), on connaît un capot d'entrée d'air pour moteur à réaction, notamment pour aéronef, ledit capot d'entrée d'air étant pourvu de moyens de dégivrage de son bord d'attaque et comportant à cet effet :
- un bord d'attaque creux délimitant une chambre périphérique interne, fermée par une première cloison interne ;
- au moins un orifice d'échappement mettant en communication ladite chambre interne avec l'extérieur et pratiqué dans ledit bord d'attaque creux ;
- une conduite d'alimentation en air chaud sous pression, apte à être raccordée, à son extrémité arrière opposée audit bord d'attaque et traversant une seconde cloison interne, à un circuit d'air chaud sous pression et, à son extrémité avant vers ledit bord d'attaque, à un injecteur injectant ledit air chaud sous pression dans ladite chambre interne du bord d'attaque ;
- une enveloppe interne de protection coopérant avec lesdites première et seconde cloisons internes pour délimiter un volume d'isolation enfermant ladite conduite d'alimentation ;
- au moins une ouverture d'introduction d'air dans ledit volume d'isolations ; et
- une ouverture d'extraction de l'air hors dudit volume d'isolation enfermant ladite conduite d'alimentation, l'aire de la section de passage de cette ouverture d'extraction étant choisie dans une gamme de valeurs telles que la surpression d'air chaud sous pression dans ledit volume d'isolation, qui résulterait d'une éventuelle avarie de ladite conduite d'alimentation, ne soit pas dommageable à ladite enveloppe interne de protection.

Ainsi, dans ce capot d'entrée d'air connu, ladite conduite, avec ses raccords et ses brides, est isolée du reste de l'intérieur du capot d'entrée d'air et ladite enveloppe interne de protection, continue et intégrale, permet de protéger les structures environnantes contre les radiations thermiques et les fuites d'air chaud sous pression, ainsi que contre les effets d'une rupture de ladite conduite. Grâce aux ouvertures d'introduction et d'extraction d'air, on obtient, en fonctionnement normal, une ventilation permanente interne du volume d'isolation, ce qui limite la radiation thermique de la conduite d'alimentation, les structures environnantes sensibles à la chaleur se trouvant ainsi protégées de toute détérioration ou vieillissement, liés à l'exposition à des températures élevées. En cas de fuites, de rupture ou d'explosion de la conduite, l'air chaud est évacué à l'extérieur à travers l'ouverture d'extraction, de sorte que, là encore, lesdites structures environnantes sont protégées contre l'air chaud sous pression.

Ce capot d'entrée d'air connu remplit donc parfaitement ses fonctions de protection thermique desdites structures environnantes. Cependant, on doit remarquer que, en cas d'avarie de la conduite d'alimentation, l'air chaud sous pression est immédiatement et en totalité adressé à l'extérieur par ladite ouverture d'extraction, dont la section est par ailleurs calibrée pour éviter que la surpression résultant de la rupture de ladite conduite ne soit dommageable à l'enveloppe interne de protection. Ainsi, cet air chaud non seulement est gaspillé inutilement et engendre en s'échappant un accroissement de traînée, mais encore cesse d'alimenter l'injecteur et la chambre périphérique interne, ce qui ne permet plus d'assurer le dégivrage du bord d'attaque dudit capot. Il n'est alors plus possible au pilote d'agir pour empêcher la formation de givre ou pour éliminer une couche de givre déjà formée avec tous les risques que cela comporte, comme par exemple la détérioration du moteur par ingestion de morceaux de glace.

On peut aisément constater que le capot d'entrée d'air décrit dans le document US-4 757 963 présente les mêmes inconvénients.

La présente invention a pour objet de remédier à ces inconvénients et d'assurer un dégivrage satisfaisant dudit bord d'attaque du capot d'entrée d'air, même en cas d'avarie grave de ladite conduite d'alimentation en air chaud.

A cette fin, selon l'invention, le capot d'entrée d'air pour moteur à réaction, notamment pour aéronef, ledit capot d'entrée d'air étant pourvu de moyens de dégivrage de son bord d'attaque et comportant à cet effet :
- un bord d'attaque creux délimitant une chambre périphérique interne, fermée par une première cloison interne ;
- au moins un orifice d'échappement mettant en communication ladite chambre interne avec l'extérieur et pratiqué dans ledit bord d'attaque creux ;
- une conduite d'alimentation en air chaud sous pression, apte à être raccordée, à son extrémité arrière opposée audit bord d'attaque et traversant une seconde cloison interne, à un circuit d'air chaud sous pression et, à son extrémité avant vers ledit bord d'attaque, à un injecteur injectant ledit air chaud sous pression dans ladite chambre interne du bord d'attaque ;
- une enveloppe interne de protection coopérant avec lesdites première et seconde cloisons internes pour délimiter un volume d'isolation enfermant ladite conduite d'alimentation ; et
- une ouverture d'extraction de l'air hors dudit volume d'isolation enfermant ladite conduite d'alimentation, l'aire de la section de passage de cette ouverture d'extraction étant choisie dans une gamme de valeurs telles que la surpression d'air chaud sous pression dans ledit volume d'isolation, qui résulterait d'une éventuelle avarie de ladite conduite d'alimentation, ne soit pas dommageable à ladite enveloppe interne de protection,
est caractérisé en ce que :
- ladite ouverture d'extraction d'air est pratiquée dans ladite première cloison pour mettre en communication ledit volume d'isolation avec ladite chambre périphérique interne dudit bord d'attaque ; et
- l'aire de la section de passage de ladite ouverture d'extraction est de plus calibrée pour présenter une résistance à l'écoulement de l'air chaud sous pression au moins égale, mais de préférence supérieure, à celle dudit injecteur.

Ainsi, en cas d'avarie de ladite conduite d'alimentation, on assure audit injecteur un débit d'air chaud sous pression au moins égal à 50% du débit d'air chaud dans ladite conduite d'alimentation. En effet, l'air chaud sous pression se répand dans ledit volume d'isolation et passe dans ladite chambre périphérique du bord d'attaque à travers ladite ouverture d'extraction d'air. Du fait du calibrage spécifique, conforme à la présente invention, de ladite ouverture d'extraction d'air, d'une part, la surpression résultant de la rupture de ladite conduite ne peut endommager les parois dudit volume d'isolation et, d'autre part, la pression régnant à l'intérieur de ce dernier croît pour devenir au plus égale à la pression d'air chaud à l'intérieur de ladite conduite d'alimentation. Il en résulte que, au niveau de la zone de fuite de la conduite d'alimentation, la pression dans ledit volume d'isolation agit comme un bouchon immatériel colmatant de manière virtuelle ladite zone de fuite et confinant l'air chaud sous pression, prélevé sur le moteur, dans la conduite d'alimentation. Ledit air chaud continue donc, au moins en partie, d'alimenter l'injecteur, ce qui permet un dégivrage satisfaisant du bord d'attaque du capot d'entrée d'air. L'air chaud ayant circulé dans ladite chambre périphérique du bord d'attaque et s'étant refroidi au contact des parois de ce dernier est alors évacué à l'air libre, sans perte de charge excessive, à travers ledit orifice d'échappement dont est pourvu ledit bord d'attaque.

De plus, le flux d'air chaud passant à travers l'ouverture d'extraction se mélange au flux d'air chaud injecté par l'injecteur et est entraîné par ce dernier, ce qui permet au premier de contribuer au dégivrage du bord d'attaque du capot d'entrée d'air.

Bien entendu, en fonctionnement normal, lorsque ladite conduite d'alimentation en air chaud n'est ni rompue, ni l'objet de fuites, ladite ouverture d'extraction pratiquée dans la première cloison ne présente aucun inconvénient, ne faisant que mettre en communication deux enceintes chaudes, à savoir le volume d'isolation et la chambre périphérique du bord d'attaque.

On remarquera que le document US-5 400 984 décrit un capot d'entrée d'air pour moteur à réaction d'aéronef dans lequel une ouverture d'extraction d'air est pratiquée dans ladite première cloison. On remarquera cependant que, dans ce dernier document :
- ladite ouverture d'extraction d'air permet une communication gazeuse libre, sans aucune entrave, entre ledit volume d'isolation et le bord d'attaque creux ; et
- de plus, l'orifice mettant en communication la chambre interne du bord d'attaque creux avec l'extérieur n'est pas pratiqué dans ce dernier, mais au contraire est prévu dans la structure de peau du compartiment arrière, un conduit coudé assurant la communication entre ladite chambre interne et ledit orifice.

Or, il est illusoire de penser pouvoir utiliser une ouverture d'extraction telle que celle prévue par US-5 400 984, pour remplacer l'injecteur en cas de rupture de ladite conduite d'alimentation. En effet, dans ce cas, l'air chaud sous pression provenant de la conduite d'alimentation rompue et remplissant ledit volume d'isolation se détend immédiatement en passant dans ladite chambre périphérique du bord d'attaque à travers ladite ouverture d'extraction et perd son énergie cinétique. Il ne peut alors que se répandre dans une zone proche de ladite ouverture d'extraction, sans pouvoir circuler dans la totalité de la chambre périphérique interne du bord d'attaque. Il en résulte, alors, que les zones de cette chambre qui sont éloignées de l'ouverture d'extraction restent soumises à des températures relativement basses, alors que celles situées au voisinage de ladite ouverture d'extraction sont portées à des températures très élevées. Il est donc impossible, dans ces conditions, d'obtenir un dégivrage satisfaisant du bord d'attaque. Cet effet nuisible est encore amplifié du fait de la perte de charge importante introduite par ledit conduit coudé.

En revanche, dans le capot de bord d'attaque conforme à la présente invention, l'orifice d'échappement est pratiqué directement dans le bord d'attaque creux, ce qui réduit à un minimum la perte de charge d'échappement du flux d'air chaud vers l'extérieur et, en cas d'avarie, on continue de pouvoir utiliser l'injecteur, malgré la rupture de la conduite d'alimentation. Par suite, dans la chambre périphérique du bord d'attaque, est injecté un flux d'air chaud sous pression qui entre en circulation dans cette chambre et, à chaque instant, le flux d'air chaud sous pression en cours d'injection se mélange au flux d'air déjà en circulation dans cette dernière. Ainsi, grâce à la présente invention, on peut homogénéiser la température du flux d'air dans ladite chambre périphérique et obtenir un dégivrage satisfaisant, même dans la partie du capot éloignée dudit injecteur.

Pour améliorer encore l'effet d'entraînement du flux d'air chaud passant à travers ladite ouverture d'extraction par le flux d'air chaud injecté par l'injecteur, il est avantageux de prévoir, à l'intérieur de ladite chambre périphérique interne du bord d'attaque, un déflecteur apte à dévier l'air chaud traversant ladite ouverture d'extraction, dans le même sens que l'air chaud injecté par ledit injecteur.

Ainsi, l'air chaud ayant traversé ladite ouverture ne se détend pas immédiatement après son passage à travers celle-ci, mais bénéficie, au contraire, de la présence dudit déflecteur pour se mettre aussi en circulation et se mélanger avec l'air chaud déjà en mouvement dans ladite chambre périphérique interne. On remarquera que les dimensions dudit déflecteur peuvent rester suffisamment faibles par rapport aux dimensions de ladite chambre, pour que la présence de ce déflecteur ne perturbe pas l'écoulement de l'air de dégivrage déjà présent dans ladite chambre.

Dans le capot d'entrée d'air conforme à la présente invention, ladite ouverture d'extraction d'air peut être formée par un unique orifice. Cependant, afin d'accélérer, dans la chambre périphérique interne du bord d'attaque, l'homogénéisation de la température entre le flux d'air chaud sous pression en cours d'injection dans la chambre et le flux d'air déjà en circulation dans cette dernière et afin de ne pas endommager les structures environnantes, il peut être avantageux que l'ouverture d'extraction soit formée d'une pluralité d'orifices dont la somme des aires de section de passage correspond à l'aire de la section de passage dudit orifice unique. Ainsi, d'une part, le flux d'air chaud passant dans la chambre périphérique du bord d'attaque à travers la pluralité d'orifices d'extraction d'air n'étant plus concentré en un seul point, la zone proche desdits orifices ne risque pas d'être endommagée par la température élevée dudit flux. D'autre part, les différents jets d'air résultant de la présence de la pluralité d'orifices d'extraction se mélangent plus rapidement avec le flux d'air déjà en circulation dans la chambre et sont donc sans danger pour les structures environnantes.

Par ailleurs, ladite ouverture d'extraction d'air peut soit se trouver à l'écart de la conduite d'alimentation en air chaud sous pression, soit entourer celle-ci. Dans ce dernier cas, elle peut alors se présenter sous la forme d'un orifice annulaire unique ou d'une pluralité d'orifices répartis autour de ladite conduite.

Comme cela a été décrit dans le document US-6 241 189, ladite enveloppe interne de protection peut coopérer, pour délimiter ledit volume d'isolation enfermant ladite conduite d'alimentation, non seulement avec lesdites première et seconde cloisons internes, mais encore avec la face interne de la paroi externe dudit capot d'entrée d'air. Toutefois, puisque ladite enveloppe interne de protection peut présenter des propriétés d'isolation thermique élevées et être suffisamment efficace pour protéger thermiquement lesdites structures environnantes, il est possible de réduire l'encombrement de l'enveloppe interne de protection et donc sa masse, en réduisant ledit volume d'isolation. Pour ce faire, l'enveloppe interne de protection peut présenter une forme tubulaire délimitant avec ladite conduite d'alimentation un volume d'isolation à section annulaire.

Ainsi, la présente invention permet d'apporter des solutions à tous les problèmes rencontrés dans les capots d'entrée d'air de moteur en ce qui concerne :
- le dégivrage systématique du bord d'attaque desdits capots même en cas de fuites d'air au niveau de la conduite d'alimentation ;
- la résistance aux températures élevées ; et
- les facilités de réparation et d'inspection ; en effet, en prévoyant amovible le montage de ladite enveloppe dans ledit capot d'entrée d'air, on peut inspecter les pièces constituant la protection thermique, ainsi que les pièces environnantes (structure et systèmes).

Les figures du dessin annexé feront bien comprendre comment l'invention peut être réalisée. Sur ces figures, des références identiques désignent des éléments semblables.

La figure 1 montre, en perspective éclatée, un moteur d'aéronef à réaction et ses différents capotages.

La figure 2 est une demi-coupe radiale agrandie, selon la flèche II de la figure 1, d'un mode de réalisation du capot d'entrée d'air dudit moteur, illustrant les moyens de dégivrage dudit capot conformes à l'invention.

La figure 3 est une coupe transversale, partielle et agrandie, selon la ligne III-III de la figure 2.

La figure 4 est une coupe transversale, partielle et agrandie, selon la ligne IV-IV de la figure 3.

La figure 5 montre, en vue semblable à la figure 3, une variante de réalisation de l'invention en ce qui concerne ladite ouverture d'extraction.

La figure 6 montre, en vue semblable à la figure 3, une autre variante de réalisation de ladite ouverture d'extraction.

La figure 7 montre, en vue semblable à la figure 3, encore une autre variante de réalisation de ladite ouverture d'extraction.

La figure 8 est une vue semblable à la figure 2 illustrant une variante de réalisation de ladite enveloppe interne de protection.

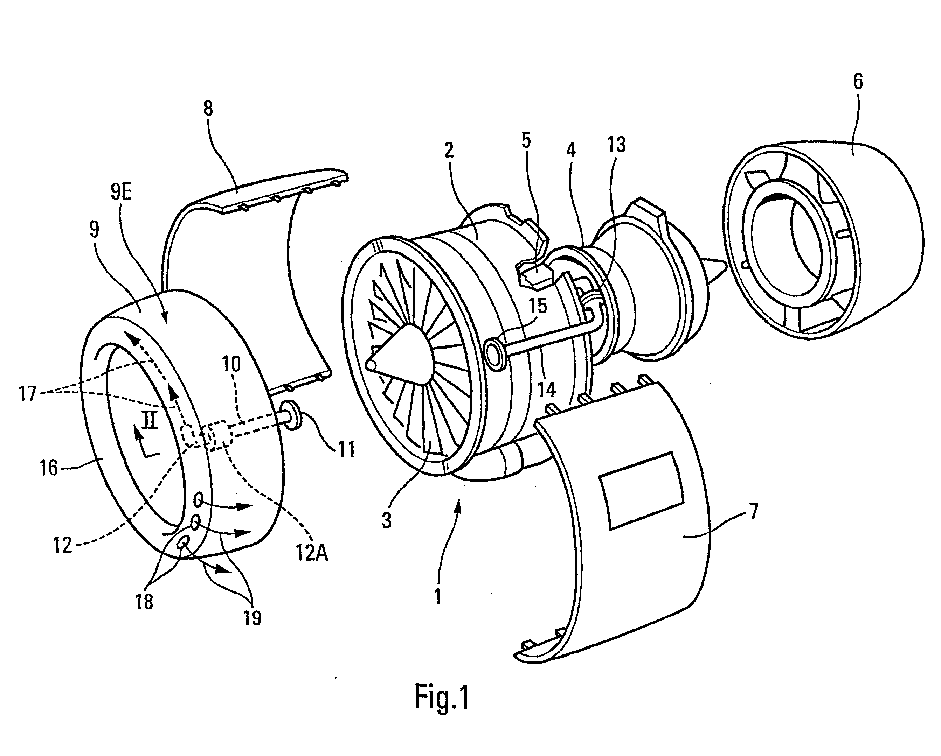

Le moteur à double flux 1 représenté schématiquement sur la figure 1 comporte, de façon connue, un générateur central d'air chaud 2, un ventilateur 3 et des étages de compresseurs 4, et il est pourvu d'une attache 5 de suspension à un mât de support (non représenté). Au moteur 1 sont associés et fixés un ensemble de tuyère 6, deux capots latéraux 7 et 8 et un capot d'entrée d'air 9.

Comme cela est illustré schématiquement sur la figure 1, le capot d'entrée d'air 9 comporte une conduite d'alimentation en air chaud 10, pourvue à son extrémité arrière dirigée vers le moteur 1 d'un élément de raccord 11 et à son extrémité avant logée dans le bord d'attaque creux dudit capot d'entrée d'air d'un injecteur 12 pourvu d'un raccord 12A. Par ailleurs, sur un étage de compresseurs du moteur 1 est agencée une prise d'air chaud sous pression 13 qui est connectée à une conduite 14 pourvue, en regard de l'élément de raccord 1 1 de la conduite 10, d'un élément de raccord complémentaire 15.

Ainsi, lorsque les éléments de raccord 11 et 15 complémentaires sont reliés l'un à l'autre, de l'air chaud sous pression prélevé en 13 sur le moteur 1 est acheminé par les conduites 14 et 10 jusqu'à l'injecteur 12. Celui-ci peut donc souffler cet air chaud sous pression (flèches pointillées 17) à l'intérieur du bord d'attaque 16, pour le dégivrer. Des orifices d'échappement 18 sont prévus pour l'évacuation à l'air libre (flèches 19) de l'air chaud ayant circulé à l'intérieur du bord d'attaque 16.

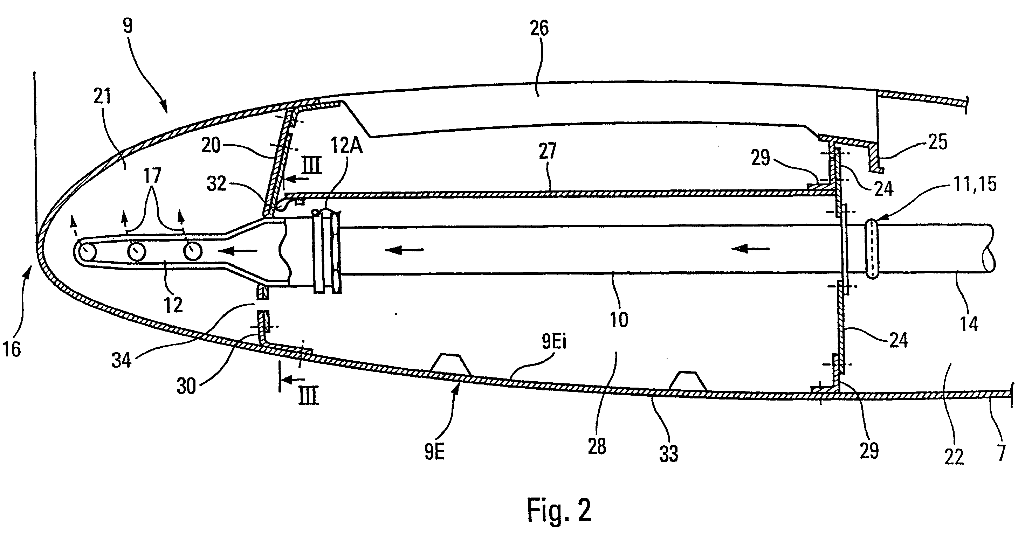

Comme le montre en détail et à plus grande échelle la demi-coupe radiale de la figure 2, le bord d'attaque creux 16 est fermé du côté arrière par une cloison interne 20, de sorte qu'une chambre périphérique annulaire 21 est formée à l'intérieur dudit bord d'attaque 16. L'injecteur 12 traverse ladite cloison interne 20 de façon étanche et y est fixé. Il peut donc injecter l'air chaud sous pression dans la chambre 21. Les orifices d'échappement 18 permettent de mettre en communication ladite chambre 21 avec l'extérieur.

Lorsque les capots latéraux 7 et 8 sont assemblés au générateur central 2, ils délimitent avec celui-ci, au niveau du ventilateur 3, un espace annulaire périphérique 22 dans lequel se trouve la conduite d'air chaud 14, ainsi que d'autres conduites de ce type (non représentées).

Par ailleurs, l'extrémité arrière de la conduite 10 --opposée à l'injecteur 12-- traverse une autre cloison 24, fermant l'extrémité arrière du capot 9, au voisinage du cadre 25 de montage dudit capot sur le moteur 1. Cette extrémité arrière de la conduite 10 est par ailleurs fixée à ladite cloison 24. Ainsi, la conduite 10 et le raccord 12A sont compris entre les deux cloisons 20 et 24, ainsi que d'autres structures, telles que par exemple un panneau acoustique 26. Un tel panneau acoustique 26 est réalisé en matériau composite, par exemple du type nid d'abeilles, et il est sensible à la chaleur. Il peut donc être détruit ou endommagé par la chaleur rayonnée par la conduite 10 ou par les éventuelles fuites d'air chaud sous pression véhiculé par celle-ci, ou bien encore, en cas d'éclatement de ladite conduite 10, par l'air chaud sous pression s'échappant de cette dernière.

Aussi, pour remédier à ces inconvénients, on prévoit une enveloppe interne de protection 27 coopérant avec les cloisons 20 et 24 et avec la face interne 9EI de la paroi 9E du capot pour délimiter un volume d'isolation 28 enfermant ladite conduite 10 et le raccord 12A et les isolant des structures 26 sensibles à la chaleur.

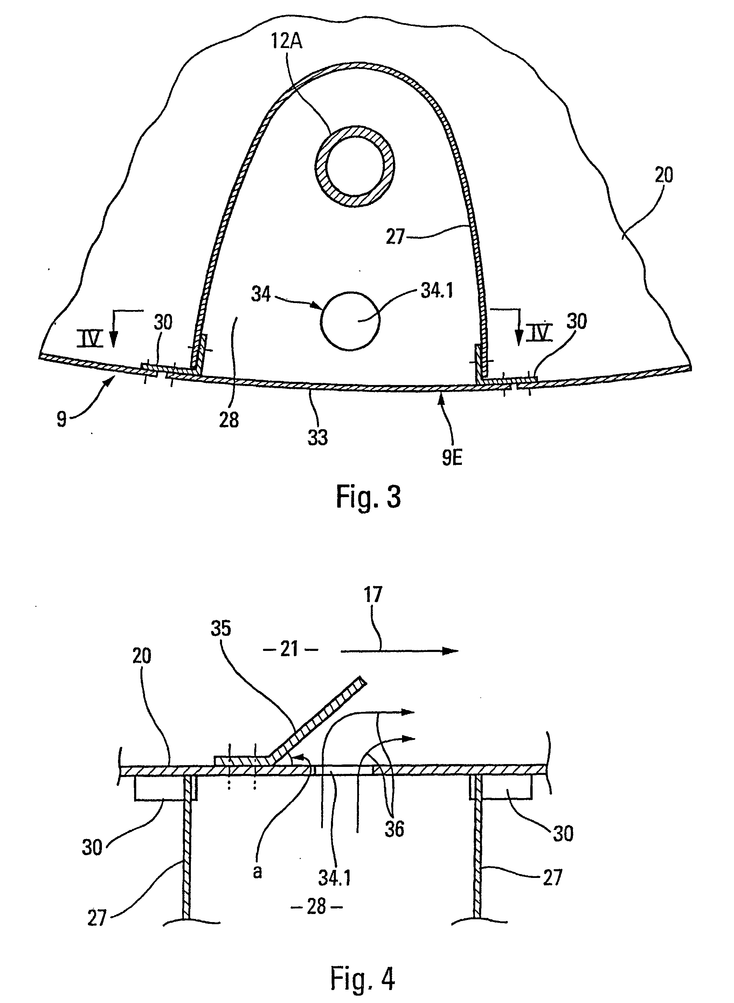

Dans l'exemple représenté sur les figures 2 et 3, l'enveloppe interne de protection 27 présente la forme d'une auge renversée et elle est fixée de façon démontable aux cloisons 20 et 24 et à la paroi externe 9E du capot 9. Dans cet exemple, l'enveloppe interne de protection 27 est fixée à la cloison 24 et à la paroi externe 9E du capot 9 par des cornières 29, 30, respectivement. De plus, pour pouvoir s'adapter aux dilatations thermiques et aux vibrations, la jonction entre le bord avant de l'enveloppe interne de protection 27 et la cloison 20 est réalisée par l'intermédiaire d'un joint élastique d'appui 32.

Pour augmenter la démontabilité de l'enveloppe interne de protection, il est avantageux que la partie de la paroi externe 9E à laquelle elle est fixée soit constituée par un panneau 33, lui-même démontable.

Par ailleurs, le volume d'isolation 28 enfermant la conduite 10 et le raccord 12A est en communication avec ladite chambre périphérique 21 par une ouverture d'extraction d'air 34 formée, dans l'exemple des figures 3 et 4, par un orifice 34.1 unique pratiqué dans la cloison 20. L'aire de la section de passage de ladite ouverture d'extraction d'air 34 est choisie, d'une part, dans une gamme de valeurs telles que la surpression d'air chaud sous pression dans ledit volume d'isolation 28, qui résulterait d'une éventuelle avarie de ladite conduite 10, ne soit pas dommageable à ladite enveloppe interne de protection 27. D'autre part, ladite aire est choisie, dans ladite gamme de valeurs, afin d'assurer audit injecteur 12, en cas d'avarie de ladite conduite 10, un débit d'air chaud sous pression au moins égal à 50% du débit d'air chaud sous pression dans ladite conduite 10. Ceci est aisément obtenu en faisant en sorte que, pour de l'air chaud sous pression qui se trouverait dans la conduite 10 rompue et dans le volume d'isolation 28, le trajet à travers l'ouverture 34 présente une résistance à l'écoulement au moins égale, mais de préférence supérieure, à celle du trajet à travers l'injecteur 12. On voit de plus que le volume d'isolation 28 enfermant ladite conduite 10 est entièrement clos, à l'exception de la communication avec ladite chambre périphérique interne 21 de bord d'attaque 16 établie par l'ouverture d'extraction 34.

Ainsi, en fonctionnement normal (voir la figure 2), l'enveloppe de protection 27 présentant des propriétés thermiques élevées est suffisamment efficace à elle seule pour protéger lesdites structures environnantes du rayonnement thermique de la conduite 10. En cas de rupture de la conduite 10, l'air chaud sous pression se répand dans le volume d'isolation 28 et passe dans la chambre périphérique annulaire 21 du bord d'attaque 16 à travers l'orifice 34.1 (voir les flèches 36 sur la figure 4). Du fait du calibrage spécifique, conforme à la présente invention, dudit orifice d'extraction 34.1, la surpression résultant de la rupture de ladite conduite ne peut endommager les parois dudit volume d'isolation 28. De plus, la pression régnant à l'intérieur de ce dernier croît pour devenir au plus égale à la pression d'air chaud, à l'intérieur de ladite conduite 10. Il en résulte que, au niveau de la zone de fuite de la conduite 10, la pression dans ledit volume d'isolation 28 agit comme un bouchon immatériel colmatant de manière virtuelle ladite zone de fuite et confinant l'air chaud sous pression, prélevé sur le moteur 1, dans la conduite 10. Ledit air chaud continue donc, au moins en partie, d'alimenter l'injecteur 12. Par suite, dans la chambre périphérique 21 du bord d'attaque 16, l'injecteur injecte un flux d'air chaud sous pression qui entre en circulation dans cette chambre et, à chaque instant, le flux d'air chaud sous pression en cours d'injection se mélange au flux d'air déjà en circulation dans cette dernière. Ainsi, on peut homogénéiser la température du flux d'air dans ladite chambre périphérique 21 et obtenir un dégivrage satisfaisant du bord d'attaque 16 du capot d'entrée d'air 9, même dans les parties du capot 9 éloignées dudit injecteur. L'air chaud ayant circulé dans ladite chambre périphérique 21 du bord d'attaque 16 et s'étant refroidi au contact des parois de ce dernier est alors évacué à l'air libre à travers lesdits orifices d'échappement 18 dont est pourvu ledit bord d'attaque 16.

Comme cela est illustré sur la figure 4, une lame déflectrice 35 peut être fixée sur la cloison interne 20, à l'intérieur de la chambre périphérique interne 21 du bord d'attaque 16, à proximité immédiate et en regard de l'orifice d'extraction 34.1 afin de dévier, dans le sens et la direction de l'air déjà en circulation dans ladite chambre 21 (flèches 17), l'air passant à travers ledit orifice 34.1 (flèches 36). Ladite lame 35 forme un angle aigu a avec la cloison 20, suffisamment important pour ne pas obstruer l'orifice d'extraction 34.1 et ne pas gêner le flux d'air passant par ledit orifice. Ledit angle a étant aigu et les dimensions de ladite lame 35 étant faibles par rapport aux dimensions de la chambre périphérique interne 21, la lame 35 ne perturbe pas l'écoulement de l'air chaud de dégivrage déjà en circulation dans ladite chambre 21. Ainsi, l'air passant à travers l'orifice d'extraction 34.1 ne se détend pas immédiatement après avoir traversé ce dernier, mais bénéficie au contraire de la présence de ladite lame 35 pour se mettre en circulation dans le sens des flèches 17 et se mélanger avec l'air déjà en circulation dans la chambre 21.

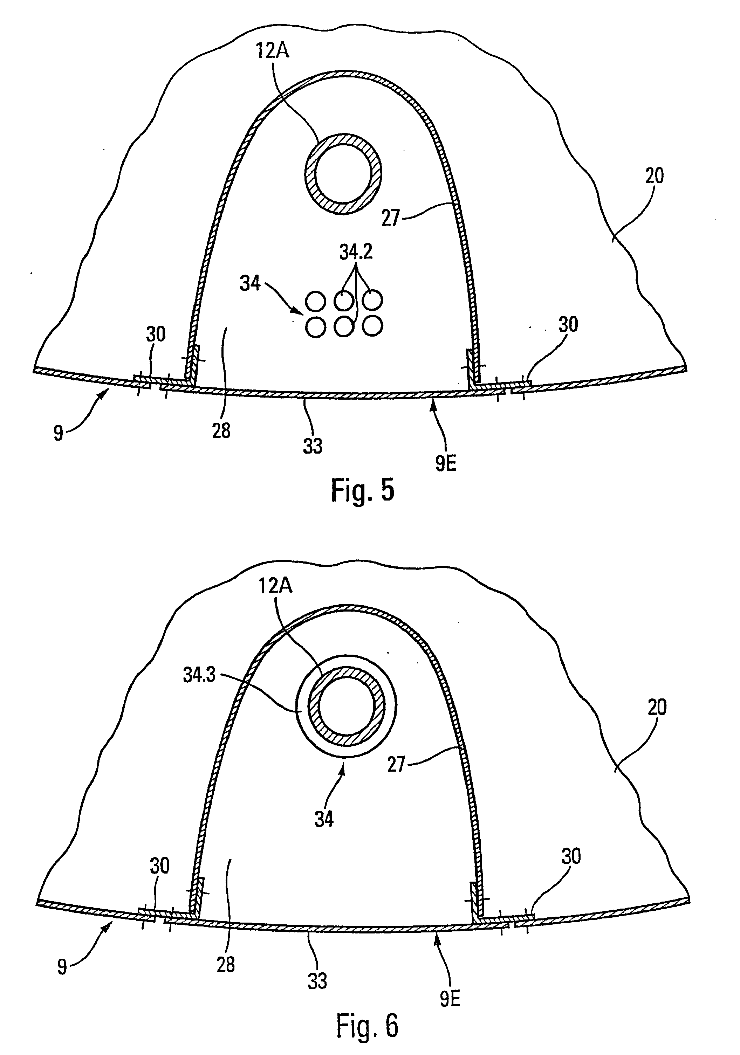

Sur la figure 5, on a représenté une variante de réalisation de l'invention. Dans cette variante, l'ouverture d'extraction 34, au lieu d'être constituée d'un unique orifice 34.1 (comme cela est représenté sur les figures 3 et 4), est formée par une pluralité d'orifices d'extraction d'air 34.2 dont la somme des aires de section de passage est choisie dans la gamme de valeurs qui, d'une part, évite qu'une surpression d'air chaud sous pression dans le volume d'isolation 28 résultant d'une éventuelle avarie de la conduite 10 ne soit dommageable à l'enveloppe de protection 27 et, d'autre part, assure à l'injecteur 12, en cas d'avarie de la conduite 10, un débit d'air chaud sous pression au moins égal à 50% du débit d'air chaud dans ladite conduite 10. Ainsi, en cas d'avarie de ladite conduite 10, l'air chaud sous pression se répand dans ledit volume d'isolation 28 et passe, sous forme de jets ponctuels, dans ladite chambre périphérique 21 du bord d'attaque 16 à travers la pluralité des orifices d'extraction d'air 34.2. Les différents jets d'air résultant de la présence de la pluralité desdits orifices 34.2 se mélangent plus rapidement avec le flux d'air déjà en circulation dans la chambre périphérique interne 21 du bord d'attaque 16 et ne risquent donc pas d'endommager les structures environnantes 26.

Sur la figure 6, on a représenté une autre variante de réalisation de l'invention. Dans cette variante, l'ouverture d'extraction 34 est formée par un orifice annulaire 34.3 entourant la conduite 10 et/ou le raccord 12A.

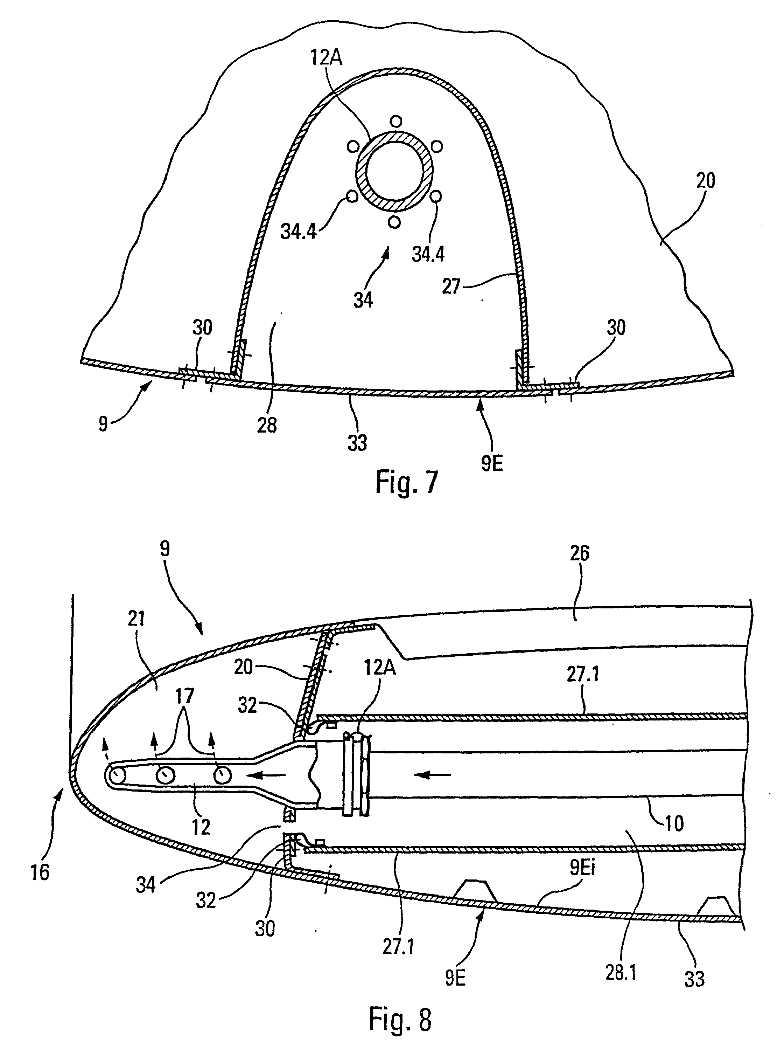

Sur la figure 7, dans une autre variante de réalisation, l'ouverture d'extraction 34 se compose d'une pluralité d'orifices 34.4 répartis autour de ladite conduite 10 et/ou du raccord 12A.

Sur la figure 8, on a représenté encore un autre mode de réalisation de l'invention. Dans ce mode de réalisation, l'enveloppe interne de protection 27.1 est tubulaire et ne coopère plus avec la face interne 9EI de la paroi externe 9E du capot (comme c'est le cas pour l'enveloppe interne 27 décrite ci-dessus) pour enfermer la conduite d'alimentation en air chaud sous pression 10 et le raccord 12A en les isolant des structures 26 sensibles à la chaleur. Ladite enveloppe interne de protection tubulaire 27.1 délimite un volume d'isolation 28.1 à section annulaire, autour de la conduite 10. Elle peut être reliée à la cloison interne 20 par le joint 32. Ce dernier mode de réalisation permet de diminuer le volume d'isolation 28.1 en diminuant l'encombrement de l'enveloppe interne de protection 27.1 dans le capot d'entrée d'air 9 et, ainsi, de réduire la masse du dispositif de protection.

## Revendications

1. Capot d'entrée d'air (9) pour moteur à réaction (1), notamment pour aéronef, ledit capot d'entrée d'air étant pourvu de moyens de dégivrage de son bord d'attaque (16) et comportant à cet effet :
- un bord d'attaque creux (16) délimitant une chambre périphérique interne (21), fermée par une première cloison interne (20) ;
- au moins un orifice d'échappement (18) mettant en communication ladite chambre interne (21) avec l'extérieur et pratiqué dans ledit bord d'attaque creux (16) ;
- une conduite (10) d'alimentation en air chaud sous pression, apte à être raccordée, à son extrémité arrière opposée audit bord d'attaque (16) et traversant une seconde cloison interne (24), à un circuit (14) d'air chaud sous pression et, à son extrémité avant vers ledit bord d'attaque (16), à un injecteur (12) injectant ledit air chaud sous pression dans ladite chambre interne (21) du bord d'attaque ;
- une enveloppe interne de protection (27, 27.1) coopérant avec lesdites première et seconde cloisons internes (20, 24) pour délimiter un volume d'isolation (28, 28.1) enfermant ladite conduite d'alimentation (10) ; et
- une ouverture (34) d'extraction de l'air hors dudit volume d'isolation (28, 28.1) enfermant ladite conduite d'alimentation (10), l'aire de la section de passage de cette ouverture d'extraction (34) étant choisie dans une gamme de valeurs telles que la surpression d'air chaud sous pression dans ledit volume d'isolation, qui résulterait d'une éventuelle avarie de ladite conduite d'alimentation (10), ne soit pas dommageable à ladite enveloppe interne de protection (27, 27.1),
**caractérisé en ce que** :
- ladite ouverture d'extraction d'air (34) est pratiquée dans ladite première cloison (20) pour mettre en communication ledit volume d'isolation (28, 28.1) avec ladite chambre périphérique interne (21) dudit bord d'attaque (16) ; et
- l'aire de la section de passage de ladite ouverture d'extraction (34) est de plus calibrée pour présenter une résistance à l'écoulement de l'air chaud sous pression au moins égale, mais de préférence supérieure, à celle dudit injecteur (12).

2. Capot d'entrée d'air selon la revendication 1,
**caractérisé en ce qu'**il comporte, à l'intérieur de ladite chambre périphérique interne (21) du bord d'attaque (16), un déflecteur (35) apte à dévier l'air chaud traversant ladite ouverture d'extraction d'air (34), dans le même sens que l'air chaud injecté par ledit injecteur (12).

3. Capot d'entrée d'air selon l'une des revendications 1 ou 2,
**caractérisé en ce que** ladite ouverture d'extraction d'air (34) est formée par un orifice unique (34.1, 34.3).

4. Capot d'entrée d'air selon l'une des revendications 1 ou 2,
**caractérisé en ce que** ladite ouverture d'extraction d'air (34) est formée par une pluralité d'orifices (34.2, 34.4).

5. Capot d'entrée d'air selon l'une des revendications 1 à 4,
**caractérisé en ce que** ladite ouverture d'extraction d'air (34) se trouve à l'écart de ladite conduite d'alimentation.

6. Capot d'entrée d'air selon l'une des revendications 1 à 4,
**caractérisé en ce que** ladite ouverture d'extraction d'air (34) entoure ladite conduite d'alimentation.

7. Capot d'entrée d'air selon l'une des revendications 1 à 6,
**caractérisé en ce que** ladite enveloppe interne de protection (27) coopère de plus avec la face interne (9Ei) de la paroi externe (9E) dudit capot (9) pour délimiter ledit volume d'isolation (28) enfermant ladite conduite d'alimentation (10).

8. Capot d'entrée d'air selon l'une des revendications 1 à 6,
**caractérisé en ce que** ladite enveloppe interne de protection (27.1) délimite avec ladite conduite d'alimentation (10) un volume d'isolation (28.1) à section annulaire.

## Patentansprüche

1. Lufteinlasshaube (9) für ein Strahltriebwerk (1), namentlich für ein Flugzeug, wobei die Lufteinlasshaube mit einer Enteisungsvorrichtung für ihre Vorderkante (16) versehen ist und zu diesem Zweck Folgendes aufweist:
- eine hohle Vorderkante (16), die eine peripherische Innenkammer (21) abgrenzt, die von einer ersten Innentrennwand (20) verschlossen wird;
- mindestens eine Ablassöffnung (18), die die Innenkammer (21) mit der Außenumgebung verbindet und in der hohlen Vorderkante (16) angebracht ist;
- eine Zuleitung (10) für heiße Druckluft, die so ausgelegt ist, dass sie mit ihrem hinteren, von der Vorderkante (16) entfernten Ende, das durch eine zweite Innentrennwand (24) führt, an einen Kreislauf (14) mit heißer Druckluft und mit ihrem vorderen, zur Vorderkante (16) gerichteten Ende an einen Injektor (12), der heiße Druckluft in die Innenkammer (21) der Vorderkante einbläst, angeschlossenwerden kann;
- eine Innenschutzhülle (27, 27.1), die mit der ersten und der zweiten Innentrennwand (20, 24) zusammenwirkt, um einen Isolierungsraum (28, 28.1) abzugrenzen, der die Zuleitung (10) umschließt; und
- eine Luftaustrittsöffnung (34), um Luft aus dem Isolierungsraum (28, 28.1), der die Zuleitung (10) umschließt, herauszuleiten, wobei der Wert für die Fläche des Strömungsquerschnitts dieser Austrittsöffnung (34) so gewählt wird, dass der Überdruck der heißen Druckluft im Isolierungsraum, der bei einem eventuellen Defekt der Zuleitung (10) entstehen würde, die Innenschutzhülle (27, 27.1) keinesfalls beschädigt,
**dadurch gekennzeichnet, dass**
- die Luftaustrittsöffnung (34) in der ersten Trennwand (20) angebracht ist, um den Isolierungsraum (28, 28.1) mit der peripherischen Innenkammer (21) der Vorderkante (16) zu verbinden; und
- die Fläche des Strömungsquerschnitts der Luftaustrittsöffnung (34) außerdem kalibriert ist, um dem Strom der heißen Druckluft einen Widerstand zu bieten, der mindestens genauso groß, vorzugsweise jedoch größer ist als der des Injektors (12).

2. Lufteinlasshaube gemäß Anspruch 1,
**dadurch gekennzeichnet, dass** sie im Innern der peripherischen Innenkammer (21) der Vorderkante (16) einen Ablenker (35) aufweist, der imstande ist, die Heißluft, die durch die Luftaustrittsöffnung (34) strömt, in die gleiche Richtung umzuleiten wie die vom Injektor (12) eingeblasene Heißluft.

3. Lufteinlasshaube gemäß einem der Ansprüche 1 oder 2,
**dadurch gekennzeichnet, dass** die Luftaustnttsoffnung (34) von einer Einzelöffnung (34.1, 34.3) gebildet wird.

4. Lufteinlasshaube gemäß einem der Ansprüche 1 oder 2,
**dadurch gekennzeichnet, dass** die Luftaustrittsöffnung (34) von einer Vielzahl von Öffnungen (34.2, 34.4) gebildet wird.

5. Lufteinlasshaube gemäß einem der Ansprüche 1 bis 4,
**dadurch gekennzeichnet, dass** sich die Luftaustrittsöffnung (34) abseits der Zuleitung befindet.

6. Lufteinlasshaube gemäß einem der Ansprüche 1 bis 4,
**dadurch gekennzeichnet, dass** die Luftaustrittsöffnung (34) die Zuleitung umgibt.

7. Lufteinlasshaube gemäß einem der Ansprüche 1 bis 6,
**dadurch gekennzeichnet, dass** die Innenschutzhülle (27) außerdem mit der Innenseite (9Ei) der Außenwand (9E) der Haube (9) zusammenwirkt, um den Isolierungsraum (28) abzugrenzen, der die Zuleitung (10) umschließt.

8. Lufteinlasshaube gemäß einem der Ansprüche 1 bis 6,
**dadurch gekennzeichnet, dass** die Innenschutzhülle (27.1) mit der Zuleitung (10) einen Isolierungsraum (28.1) mit ringförmigem Querschnitt abgrenzt.

## Claims

1. Air inlet cowl (9) for a jet engine (1), particularly an aeroengine, said air inlet cowl being provided with means for deicing its leading edge (16), and comprising to this end:
- a hollow leading edge (16) delimiting an internal peripheral chamber (21), closed by a first internal partition (20);
- at least one exhaust orifice (18) placing said internal chamber (21) in communication with the outside and made in said hollow leading edge (16);
- a pressurized hot air feedpipe (10) capable of being connected, at its rear end away from said leading edge (16) and passing through a second internal partition (24), to a pressurized hot air circuit (14) and, at its front end towards said leading edge (16), to an injector (12) injecting said pressurized hot air into said internal chamber (21) of the leading edge;
- a protective internal casing (27, 27.1) collaborating with said first and second internal partitions (20, 24) to delimit an isolation volume (28, 28.1) enclosing said feedpipe (10); and
- an opening (34) for extracting the air out of said isolation volume (28, 28.1) enclosing said feedpipe (10), the area of the flow cross section of said extraction opening (34) being chosen from a range of values such that overpressure of pressurized hot air in said isolation volume, which would result from any damage to said feedpipe (10), cannot damage said protective internal casing (27, 27.1),
**characterized in that**:
- said extraction opening (34) is made in said first partition (20) in order to bring said isolation volume (28, 28.1) into communication with said internal peripheral chamber (21) of said leading edge (16); and
- the area of the flow cross section of said extraction opening (34) is also gauged so as to have a resistance to the flow of the pressurized hot air at least equal to, but preferably greater than, that of said injector (12).

2. Air inlet cowl according to Claim 1,
**characterized in that** it comprises, inside said internal peripheral chamber (21) of the leading edge (16), a deflector (35) capable of deflecting the hot air passing through said air extraction opening (34) in the same direction as the hot air injected by said injector (12).

3. Air inlet cowl according to either of Claims 1 and 2,
**characterized in that** said air extraction opening (34) is formed of a single orifice (34.1, 34.3).

4. Air inlet cowl according to either of Claims 1 and 2,
**characterized in that** said air extraction opening (34) is formed of a number of orifices (34.2, 34.4).

5. Air inlet cowl according to one of Claims 1 to 4,
**characterized in that** said air extraction opening (34) is away from said feedpipe.

6. Air inlet cowl according to one of Claims 1 to 4,
**characterized in that** said air extraction opening (34) surrounds said feedpipe.

7. Air inlet cowl according to one of Claims 1 to 6,
**characterized in that** said protective internal casing (27) collaborates in addition with the internal face (9Ei) of the external wall (9E) of said cowl (9) to delimit said isolation volume (28) enclosing said feedpipe (10).

8. Air inlet cowl according to one of Claims 1 to 6,
**characterized in that** said protective internal casing (27.1) delimits, with said feedpipe (10), an isolation volume (28.1) of annular cross section.
